# EUROPÄISCHE PATENTSCHRIFT

(11) **EP 2 106 942 B1**
(45) Veröffentlichungstag und Bekanntmachung des Hinweises auf die Patenterteilung: **01.12.2010**
(21) Anmeldenummer: 09157164.6
(22) Anmeldetag: 02.04.2009
(51) Int. Cl.: B60H 1/00, B60R 21/205, B60R 21/268, B60R 21/26

(54) **Airbag-Anordnung für ein Kraftfahrzeug**
Airbag assembly for a motor vehicle
Agencement d'airbag pour un véhicule automobile

(30) Priorität: 03.04.2008 DE 102008017134
(43) Veröffentlichungstag der Anmeldung: 07.10.2009
(73) Patentinhaber: International Automotive Components Group GmbH, 47804 Krefeld (DE)
(72) Erfinder: Bergers, Helmut, 47929 Grefrath (DE); Humpert, Stefan, 47608 Geldern (DE); Rijpkema, Henk, 5991 GS Baarlo (NL)
(74) Vertreter: Liesegang, Eva

(56) Entgegenhaltungen:
- EP-A- 1 270 341
- EP-A- 1 419 941
- GB-A- 2 422 357

## Beschreibung

Die Erfindung betrifft eine Airbag-Anordnung für ein Kraftfahrzeug, die im Frontbereich der Fahrzeugkabine, insbesondere zum Schutz eines Beifahrers, angeordnet ist.

Im Stand der Technik ist es bekannt, Airbag-Module zu verwenden, bei denen ein Gassack und ein Gasgenerator gemeinsam in einem Airbag-Gehäuse untergebracht sind und dieses Airbag-Modul insgesamt in die Instrumententafel eines Kraftfahrzeuges eingebaut wird. Das Airbag-Gehäuse besteht in der Regel aus Metall oder Kunststoff. Beispiele für einen solchen Stand der Technik finden sich in der DE 100 32 104 und in der DE 102 53 185.

Die DE 200 23 347 U1 beschreibt ein Airbagsystem, das im Frontbereich einer Fahrzeugkabine zum Schutz eines Beifahrers angeordnet ist. Der Träger der Instrumententafel weist eine wannenförmige Aufnahme für den Airbagsack auf, die einteilig mit dem Träger ausgebildet oder getrennt von dem Träger hergestellt und dann mit diesem verbunden sein kann. Ein Gasgenerator kann innerhalb oder außerhalb der Aufnahmewanne angeordnet werden und ist mit dem Gassack über eine Leitung verbunden. Das Airbagmodul aus dem Gassack und dem Gas generator wird unterhalb des Trägers auf dem Querträger des Kraftfahrzeuges abgestützt. Wenn die Aufnahme für den Gassack mit Verstärkungsrippen versehen ist, kann der Gasgenerator außen an der Aufnahme befestigt werden. Darüber hinaus befasst sich das Dokument mit dem Auslösen des Airbags und schlägt vor, oberhalb des Aufnahmeraums für den Gassack keine Abdeckklappe vorzusehen.

Die US 6,428,036 B1 beschreibt ein Airbagsystem mit einer Schnellkupplung zwischen dem Gassack und dem Gasgenerator, wobei sowohl pyrotechnische als auch Kaltgas- und Hybridgasgeneratoren erwähnt sind. Gassack und Gasgenerator sind an verschiedenen Teilen eines Trägers an der Instrumententafel angeordnet und über eine Leitung und zwei Schnellkupplungen miteinander verbunden. Das Dokument bezieht sich vornehmlich auf das Vorsehen der Schnellkupplung; es ist nicht erkennbar, wie Gassack und Gasgenerator im Einzelnen angeordnet und montiert werden.

Die DE 197 04 684 A1 beschreibt ein Airbagsystem für die Beifahrerseite eines Kraftfahrzeuges, in dem der Gassack in einer mit dem Träger der Instrumententafel verbundenen Halbschale untergebracht ist und der Gasgenerator hiervon getrennt angeordnet und an dem Fahrzeugaufbau abgestützt ist. Die Wanne zur Aufnahme des Gassacks ist zur Aufnahme der auftretenden Druck- und Zugkräfte ebenfalls an dem Fahrzeugaufbau abgestützt.

Die DE 198 43 828 A1 beschreibt ein Airbagsystem, bei dem der Gaskanal zwischen dem Gassack und dem Gasgenerator in einem Klimalüftungskanal untergebracht sein soll. Die Funktionsfähigkeit dieses Systems ist zweifelhaft.

Aus GB 2 422 357 A ist eine Anordung bekannt, wobei des Gasgenerator von Gassack raümlichgetrennt ist.

Bei den bekannten Airbagsystemen werden der Gasgenerator und/oder der Gassack an dem Fahrzeugaufbau, beispielsweise dem Querträger, abgestützt, um die beim Auslösen des Airbags entstehenden Zug- und Druckkräfte aufzunehmen. Dies erfolgt durch ein direktes Abstützen des Gasgenerators oder durch ein Abstützen des Bauteils, an dem der Gasgenerator angebracht ist.

Die bekannten Airbag-Module zum Einbau in die Instrumententafel eines Kraftfahrzeuges verwenden in der Regel pyrotechnische oder hybride Gasgeneratoren zum Erzeugen des zum Entfalten und Aufblasen des Gassacks notwendigen Gasdrucks. Pyrotechnische Gasgeneratoren sind im Stand der Technik bekannt. Sie weisen am Anfang der Zündkette einen Anzünder auf, der die Aufgabe hat, den gasgenerierenden Treibstoff zu zünden und damit das für die Funktion des Airbags benötigte Gas freizusetzen. Die Zündung eines solchen Gasgenerators birgt durch die Gasdynamik in Verbindung mit Temperaturen von >1000°C ein entsprechendes Gefahrenpotential. Solche pyrotechnische Gasgeneratoren dürfen daher nur von geschultem Fachpersonal gehandhabt werden und sind, gemeinsam mit dem Gassack, in dem Airbag-Gehäuse fest eingebaut, wobei das Airbag-Gehäuse manipulationssicher verschlossen ist. Da ein pyrotechnischer Gasgenerator bei Zündung ferner sehr hohe Temperaturen entwickelt, müssen an die Verbindungsleitung und deren Anschlüsse zwischen dem Gasgenerator und dem Gassack hohe Anforderungen gestellt werden. Eine Manipulation dieser Verbindungsleitung nach dem Zusammenbau des Airbag-Moduls muss sicher ausgeschlossen werden.

Hybridgasgeneratoren verfügen sowohl über eine pyrotechnische Treibladung als auch über eine Kaltgasquelle in Form eines Gasspeichers. Pyrotechnische oder hybride Gasgeneratoren werden in Airbagmodulen verwendet, die zum Einbau im Frontbereich der Fahrzeugkabine eines Kraftfahrzeugs bestimmt sind, weil diese Gasgeneratoren durch die hohe Energiedichte im Treibstoff geringe Abmessungen haben und es daher erlauben, ein Airbag-Modul kleiner Baugröße herzustellen.

Im Stand der Technik sind auch Kaltgasgeneratoren bekannt, die auf den Einsatz einer Treibgasladung verzichten und lediglich eine Zündpille mit einer geringen Menge einer pyrotechnischen Zündladung benötigen, um ein den Gasbehälter verschließendes Dichtelement zu zerstören, so dass das Gas aus dem Gasbehälter austreten und in den Gassack gelangen kann. Solche Kaltgasgeneratoren sind beispielsweise in der EP 1 336 538 A1 und in der EP 1 702 815 A2 beschrieben.

Kaltgasgeneratoren werden jedoch in der Regel nicht für Airbag-Module im Frontbereich der Fahrzeugkabine eines Kraftfahrzeugs eingesetzt, weil dort nicht der notwendige Bauraum zur Verfügung steht. Insbesondere Airbag-Module für einen Beifahrer-Airbag müssen platzsparend aufgebaut sein, weil sie in der Regel über dem Handschuhfach angeordnet sind und somit die Baugröße des Airbag-Moduls das Volumen des Handschuhfachs begrenzt. Die US 6,428,036 B1 beschreibt zwar grundsätzlich die Einsatzmöglichkeit verschiedener Gasgeneratorarten in verschiedenen Airbagsystemen, die im Frontbereich des Fahrzeuges als Fahrer- oder Beifahrerairbag, im Fahrzeugsitz oder an anderer Stelle angeordnet sind; wie jedoch ein Airbagsystem mit einem Kaltgasgenerator im Frontbereich eines Fahrzeuges zum Schutz eines Beifahrers tatsächlich aufgebaut und angeordnet werden kann, geht aus diesem Dokument nicht hervor.

Es ist somit eine Aufgabe der Erfindung, eine Airbag-Anordnung für ein Kraftfahrzeug anzugeben, die im Frontbereich der Fahrzeugkabine, insbesondere zum Schutz eines Beifahrers, angeordnet werden kann und die Nachteile des Standes der Technik vermeidet. Die Airbag-Anordnung soll insbesondere platzsparend aufgebaut und angeordnet sein.

Diese Aufgabe wird erfindungsgemäß durch eine Airbag-Anordnung mit den Merkmalen von Patentanspruch 1 gelöst.

Die Erfindung sieht eine Airbag-Anordnung für ein Kraftfahrzeug vor, die im Frontbereich der Fahrzeugkabine, insbesondere zum Schutz eines Beifahrers, angeordnet ist. Die Airbag-Anordnung umfasst einen Gassack und wenigstens einen Kaltgasgenerator, die räumlich getrennt voneinander angeordnet und über einen Gaskanal miteinander verbunden sind. Der Aufnahmeraum für den Gassack ist in ein Luftführungsbauteil des Frontbereiches der Fahrzeugkabine integriert, und der Kaltgasgenerator ist an der Außenseite des Aufnahmeraums für den Gassack an dem Luftführungsbauteil angeordnet. Das Luftführungsbauteil, das in der Fachsprache auch als "Luftkanal" bezeichnet wird, ist ein unter der Instrumententafel des Fahrzeuges angeordnetes Formteil, in dem Luftkanäle für die Belüftung des Innenraums des Kraftfahrzeuges ausgebildet sind, z. B für die Enteisung der Scheiben und für die Klimatisierung des Fahrgastraumes. Die Erfindung erweitert das Luftführungsbauteil um den Aufnahmeraum für den Gassack. Das Formteil ist häufig als Kunststoffspritzgussteil oder aus einem gepressten Faserplattenmaterial hergestellt, wobei der wannenförmige Aufnahmeraum vorzugsweise mit dem Luftführungsbauteil einteilig ausgebildet wird. Im eingebauten Zustand ist das Luftführungsbauteil mit der Instrumententafel fest verbunden.

Die Erfindung erzielt eine ganze Reihe von Vorteilen. Die Airbag-Anordnung benötigt kein separates Gehäuse, wodurch Gewicht und Kosten reduziert werden. Insbesondere ist es nicht notwendig, die Airbag-Anordnung in einem manipulationssicheren Gehäuse unterzubringen, weil aufgrund der Verwendung eines Kaltgasgenerators niedrigere Sicherheitsanforderungen wegen des nur geringen Einsatzes pyrotechnischer Materialien beachtet werden müssen. Verbindungskanäle und deren Anschlüsse müssen nicht hoch temperaturfest sein, weil der Kaltgasgenerator nur Temperaturen im Bereich der Umgebungsbedingungenerzeugt. Die Montage kann durch angelernte Fachkräfte erfolgen, die keine spezielle Schulung bezüglich des Umgangs mit pyrotechnischem Material benötigen.

Auch für die erfindungsgemäße Airbag-Anordnung gelten grundsätzlich Beschränkungen hinsichtlich ihrer Positionierung und des im Frontbereich der Fahrzeugkabine zur Verfügung stehenden Raums. Gleichwohl ist die Verwendung eines relativ groß bauenden Kaltgasgenerators möglich, weil der Gasgenerator getrennt von dem Gassack in einem Bereich angeordnet werden kann, der nicht für andere Einrichtungen des Kraftfahrzeugs benötigt werden kann. Erfindungsgemäß werden der Aufnahmeraum für den Gassack und der oder die Kaltgasgeneratoren in dem Luftführungsbauteil in Bereichen angeordnet, welche nicht für Luftkanäle oder andere Einbauten, die sich unterhalb der Instrumententafel des Kraftfahrzeuges befinden, benötigt werden. Dadurch ist eine besonders gute Ausnutzung des unterhalb der Instrumententafel zur Verfügung stehenden Bauraumes möglich.

Aus der Integration des Aufnahmeraums in das Luftführungsbauteil ergibt sich als ein weiterer Vorteil ein verbesserter Diebstahlschutz. In der jüngsten Vergangenheit werden zunehmend vollständige Airbagmodule aus Kraftfahrzeugen gestohlen. Der Grund hierfür ist, dass nach dem Auslösen eines Airbags für die Wiederherstellung des Kraftfahrzeugs u.a. die Instrumententafel und das Airbagmodul ersetzt werden müssen. Während die Instrumententafel auf dem Markt frei erhältlich ist, ist dies für Airbagmodule nicht der Fall, so dass häufig der gezielte Diebstahl von Airbagmodulen in Auftrag gegeben wird. Dies ist nach Aussage der Kraftfahrzeugversicherer inzwischen zu einem schwerwiegenden Problem geworden. Der Diebstahl eines vollständigen Airbag-Systems gemäß der Erfindung ist nicht möglich. Da das Luftführungsbauteil nach seiner Montage unterhalb der Instrumententafel in der Regel unlösbar mit dieser verbunden und kein separater Aufnahmeraum für den Gassack vorgesehen ist, können die Komponenten des Airbag-Systems der Erfindung nur unter Zerstörung des Luftführungsbauteils "ausgebaut" werden. Durch diesen zerstörenden Ausbau lässt sich kein vollständiges und funktionsfähiges Airbag-System erhalten, das in ein anderes Kraftfahrzeug eingebaut werden könnte.

Während die Airbagsysteme des Standes der Technik in der Regel eine Abstützung des Gasgenerators und des Gassacks oder des integrierten Airbag-Moduls am Fahrzeugaufbau, beispielsweise am Querträger, erfordern, schafft die Erfindung eine Airbag-Anordnung, bei der die Baugruppe aus dem Aufnahmeraum für den Gassack und dem Kaltgasgenerator als eine selbsttragende Einheit ausgebildet sein kann. Eine selbsttragende Einheit entsteht insbesondere dann, wenn der Kaltgasgenerator an der Außenseite des Aufnahmeraums für den Gassack angebracht wird, vorzugsweise werden zwei Kaltgasgeneratoren beidseits des Aufnahmeraums angeordnet. Der Aufnahmeraum für den Gassack ist beispielsweise wannenförmig, wobei die beiden Kaltgasgeneratoren vorzugsweise im Bereich der beiden Längskanten des Wannenbodens angebracht werden. Hierzu wird erfindungsgemäß vorzugsweise eine Halterung für den oder die Gasgeneratoren an der Außenseite der Bodenwand des Aufnahmeraums angebracht, die so ausgebildet ist, dass sie die Bodenwand des Aufnahmeraums stabilisiert. Zusätzlich können an der Bodenwand des Aufnahmeraums für den Gassack und/oder entlang der Seitenwände Verstärkungsrippen an den Aufnahmeraum angeformt oder angebracht werden. Vorzugsweise werden die Verstärkungsrippen bei der Herstellung des Formteils zusammen mit dem Aufnahmeraum für den Gassack in einem Herstellungsschritt ausgebildet.

In einer besonders bevorzugten Ausführung der Erfindung ist in dem Aufnahmeraum für den Gassack eine Gas-Diffusorplatte angeordnet, über die der Kaltgasgenerator Gas in den Gassack leitet. Diese Gas-Diffusorplatte liegt vorzugsweise an der Innenseite der Bodenwand des Aufnahmeraums und ist so ausgebildet, dass sie den Aufnahmeraum zusätzlich stabilisiert.

In der bevorzugten Ausführung der Erfindung sind ein oder zwei Kaltgasgeneratoren mittels der Halterung an der Bodenwand des Aufnahmeraums für den Gassacks außen an diesem angebracht, und die Gas-Diffusorplatte liegt dieser Halterung an der Innenseite der Bodenwand des Aufnahmeraums gegenüber, so dass die Halterung und die Gas-Diffusorplatte gemeinsam bei Auslösen des Airbags entstehende Zug- und Druckkräfte aufnehmen und dämpfen. Diese Ausführung ermöglicht die Herstellung einer selbsttragenden Airbag-Einheit im Bereich des Formteils des Luftführungsbauteils unter Verwendung des serienmäßigen Materials solcher Luftführungsbauteile, die keine separate Abstützung an dem Fahrzeugaufbau, beispielsweise dem Querträger, erfordert. Vorzugsweise werden zusätzlich entlang der Bodenwand des Aufnahmeraums und/oder entlang seiner Seitenwände Verstärkungsrippen vorgesehen, die in einem Herstellungsschritt mit dem Aufnahmeraum für den Gassack aus demselben Material ausgebildet werden können.

Grundsätzlich gilt für Kaltgasgeneratoren, dass sie keine thermische Belastung des gesamten Airbag-Systems sowie der Aufnahme für das Airbag-System erzeugen, so dass hinsichtlich der Wahl der Materialien größere Freiheit besteht.

Der für den eigentlichen Gassack der Airbag-Anordnung benötigte Bauraum ist deutlich kleiner als der Raum, den ein herkömmliches integriertes Airbag-Modul beansprucht. Der Gassack kann platzsparend beispielsweise über dem Handschuhfach untergebracht werden, so dass ein größeres Volumen für den Handschuhkasten zur Verfügung steht. Die Verwendung des Kaltgasgeneratars ermöglicht ferner die Verwendung eines leichteren Gewebes zur Herstellung des Gassacks als bei Einsatz von pyrotechnischen oder hybriden Gasgeneratoren.

Schließlich ermöglicht es die Erfindung, die Airbag-Anordnung mit weniger Prozessschritten zu realisieren, als für die bekannten Airbag-Module nötig sind, woraus sich wiederum eine Kostenreduzierung ergibt.

Der Aufnahmeraum für den Gassack ist zweckmäßig unmittelbar unter der Instrumententafel angeordnet, mit einer geeigneten Abdeckung des Gassacks, die ein kontrolliertes Austreten des Gassacks bei Auslösen des Airbags erlaubt.

In einer anderen Ausführung der Erfindung ist der Aufnahmeraum für den Gassack im Beifahrer-Fußraum, vorzugsweise auf etwa Kniehöhe des Beifahrers, angeordnet.

Während der Gassack unmittelbar unter der dem Beifahrer zugewandten Irmenverkleidung angeordnet ist, kann der Kaltgasgenerator an nahezu beliebiger Stelle im Frontbereich des Fahrzeugs angeordnet werden. In einer Ausführung ist er in Fahrtrichtung des Kraftfahrzeugs vor dem Aufnahmeraum für den Gassack angeordnet. Entscheidend ist letztendlich, dass der Kaltgasgenerator die Funktion der anderen Komponenten des Kraftfahrzeugs, einschließlich das Entfalten des Gassacks nicht behindert. Dies erlaubt es, den Kaltgasgenerator an einer Stelle im Frontbereich der Fahrzeugkabine anzuordnen, die nicht von anderen Einrichtungen benötigt wird, so dass kein zusätzlicher Platzbedarf für die Unterbringung des Kaltgasgenerators entsteht.

Für den Transport kann der Gassack eine einfache Ummantelung aus Papier, Pappe oder Kunststoff aufweisen.

In einer bevorzugten Ausführung der Erfindung bildet der Aufnahmeraum für den Gassack auch einen Führungskanal (Schusskanal) für die Entfaltung des Gassacks.

In einer weiteren vorteilhaften Ausführung der Erfindung ist in eine Wand des Aufnahmeraums für den Gassack, beispielsweise in der Bodenwand, ein Gaskanal zur Verbindung des Kaltgasgenerators mit dem Gassack eingeformt. Der Gaskanal steht vorzugsweise in direkter Verbindung mit der Gas-Diffusorplatte, über die das Gas in den Gassack strömt. Der Kaltgasgenerator kann an diesem Gaskanal direkt angeflanscht sein.

Die Erfindung ist im folgenden anhand von bevorzugten Ausführungen mit Bezug auf die Zeichnungen näher erläutert. In den Figuren zeigen:
- Fig. 1: eine auseinandergezogene perspektivische Darstellung eines Luftführungsbauteil und einer Instrumententafel eines Kraftfahrzeuges mit einem Airbag-Modul, von dem die Erfindung ausgegangen ist;
- Fig. 2: eine ähnliche Darstellung wie Fig. 1 mit einer Airbag-Anordnung gemäß der Erfin- dung;
- Fig.: 3 eine perspektivische, teilweise geschnittene Darstellung der Airbag-Anordnung der Fig. 2;
- Fig. 4: eine perspektivische Schnittdarstellung einer Airbag-Anordnung gemäß einer weiteren Ausführung der Erfindung; und
- Fig. 5: eine ähnliche Darstellung der Airbag-Anordnung wie in Fig. 4, wobei die Blickrich- tung der Fig. 4 auf die Instrumententafel und die Oberseite des Luftführungsbauteils gerichtet ist und die Blickrichtung der Fig. 5 auf die Unterseite des Luftführungsbau- teils.

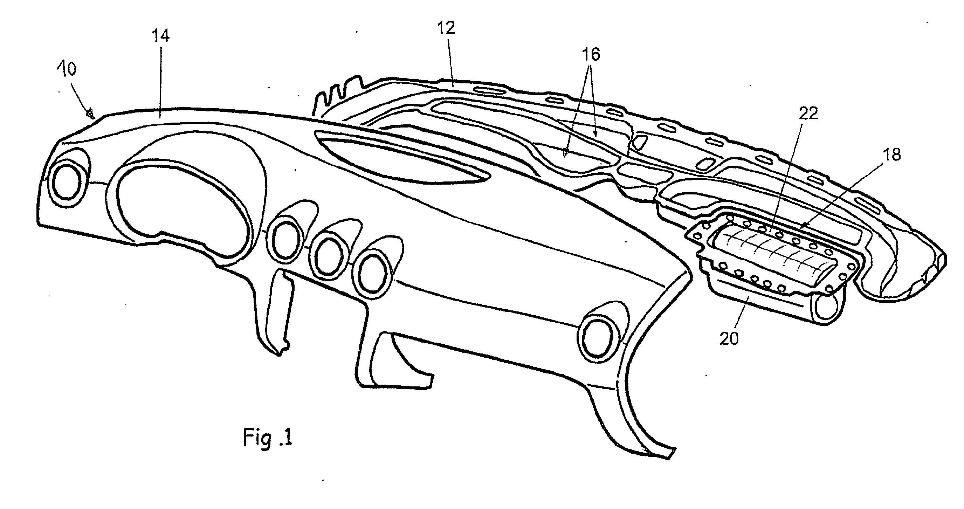

Fig. 1 zeigt eine perspektivische auseinandergezogene Darstellung einer Instrumententafel 10 und eines Luftführungsbauteils 12 eines Kraftfahrzeuges. Das Luftführungsbauteil 12 ist ein Formteil, das beispielsweise durch Kunststoff-Spritzgießen oder aus einem pressgeformten Faserplattenmaterial hergestellt ist und in dem Luftkanäle 16 zur Zuführung von Luft zur Belüftung des Fahrzeuginnenraumes ausgebildet sind. In der in Fig. 1 gezeigten Ausführung, die den Ausgangspunkt der Erfindung darstellt, ist ein Airbag-Modul 20 im Bereich einer hierfür vorgesehenen Ausnehmung 18 des Luftführungsbauteils 12 angeordnet und mit dem Träger der Instrumententafel 10 verbunden. Das Airbag-Modul 20 ist an der Instrumententafel 10 z.B. angeschraubt oder angenietet, wie bei 22 angedeutet.

Das Luftführungsbauteil 12 liegt unter der Instrumententafel 10, die, wie im Stand der Technik bekannt, aus einem ein- oder mehrteiligen Träger 14 und einem Deckmaterial 15 aufgebaut ist. Das Deckmaterial 15 kann mehrlagig sein und eine Polsterschicht aufweisen. Auch der Träger 14 der Instrumententafel 10 kann aus einem pressgeformten Faserplattenmaterial oder als Kunststoff-Spritzgussteil hergestellt sein, wobei es sich um ein von dem Luftführungsbauteil 12 getrenntes Trägerbauteil handelt. In eingebautem Zustand sind das Luftführungsbauteil 12 und die Instrumententafel 10 in der Regel unlösbar miteinander verbunden.

Der Träger der Instrumententafel 10 kann kaschiert oder auf andere Weise beschichtet oder mit einer Oberflächengestaltung versehen sein. Im Bereich des Airbag-Moduls 20 weist die Instrumententafel 10 in der Regel eine Abdeckung mit Sollbruchstellen auf, wobei auch die Kaschierung korrespondierende Schwächungen hat. Wenn bei einem Aufprall der Gassack des Airbag-Moduls 20 aufgeblasen wird und sich entlang des Schusskanals (nicht gezeigt) ausbreitet, drückt er gegen diese Abdeckung (nicht gezeigt), so dass sie entlang der Sollbruchstellen und Schwachstellen aufgerissen wird. All dies ist aus dem Stand der Technik bekannt.

Das Airbag-Modul 20, das den Ausgangspunkt für die Erfindung bildet, umfasst einen Gassack und einen pyrotechnischen oder hybriden Gasgenerator, die gemeinsam in einem Gehäuse untergebracht sind. Da sich beim Zünden des Gasgenerators sehr hohe Temperaturen entwickeln, sollte dieser möglichst nahe bei dem Gassack angeordnet sein. Dadurch ergibt sich eine relativ voluminöse Gesamtanordnung, deren Unterbringung im Frontbereich des Fahrgastraumes eines Kraftfahrzeuges Schwierigkeiten bereiten kann. In der Praxis erzwingt die Anordnung des Airbag-Moduls für einen Beifahrer-Airbag einer Verringerung des Volumens des Handschuhlcastens.

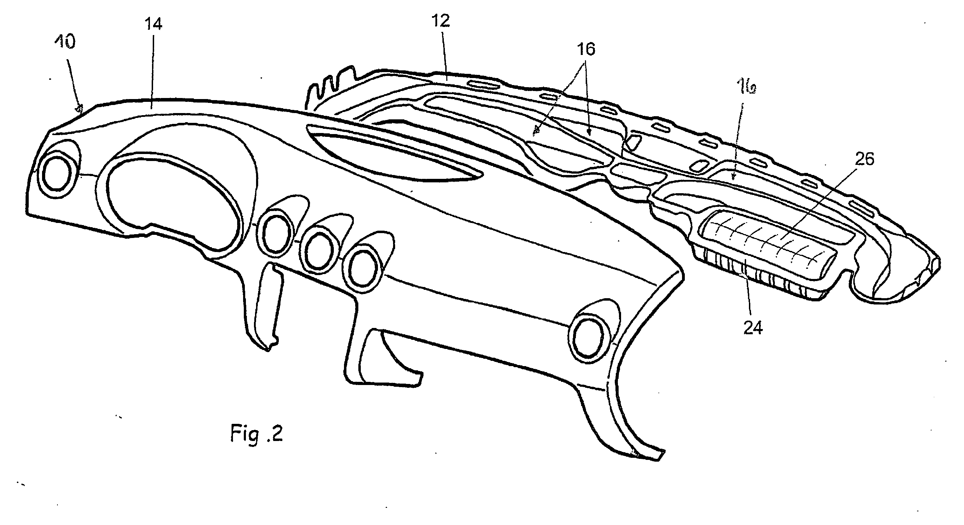

Fig. 2 zeigt eine ähnliche Ansicht einer Instrumententafel 10 und eines Luftführungsbauteils 12 für ein Kraftfahrzeug wie Fig. 1, wobei das Luftführungsbauteil der Fig. 2 eine Airbag-Anordnung gemäß der Erfindung aufnimmt. Identische Komponenten sind mit denselben Bezugszeichen bezeichnet und nicht nochmals beschrieben.

Erfindungsgemäß ist das Luftführungsbauteil 12 dahingehend modifiziert, dass ein Aufnahmeraum 24 für den Gassack 26 der Airbag-Anordnung mit dem Luftführungsbauteil 12 verbunden oder an dieses angeformt ist. Dieser Aufnahmeraum 24 muss nur so groß sein, dass er den eigentlichen Gassack 26 der Airbag-Anordnung aufnehmen kann, jedoch keine weiteren Komponenten, wie einen Gasgenerator, einen Verbindungskanal, Zünder oder dergleichen. Der Gassack 26 ist über eine Zuführung mit einem Kaltgasgenerator verbunden (in Fig. 2 nicht dargestellt), wobei der Kaltgasgenerator vorzugsweise an der Rückseite des Aufnahmeraums 24 oder eines der Luftkanäle 16 des Luftführungsbauteils 12 untergebracht sein kann. Zweckmäßig wird der Kaltgasgenerator in einem Bereich des Luftfizhrungsbauteils 12 angeordnet, der nicht für andere Komponenten, wie Luft- oder Leitungsführung- und Klimageräte, benötigt wird.

Die umlaufenden Wände des Aufnahmeraums 24 bildet zugleich eine Führung (Schusskanal) für die Entfaltung des Gassacks bei einem Aufprall des Kraftfahrzeugs.

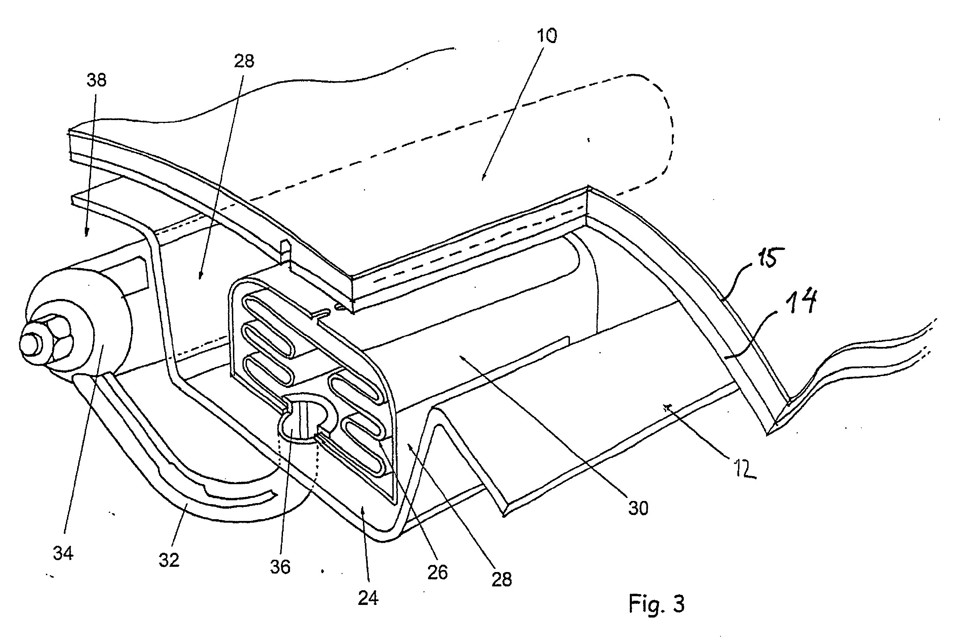

Fig. 3 zeigt die erfindungsgemäße Airbag-Anordnung mit weiteren Einzelheiten. Entsprechende Bauteile sind mit denselben Bezugszeichen bezeichnet.

Wie in Fig. 3 dargestellt, ist der Gassack 26 der Airbag-Anordnung in dem Aufnahmeraum 24 untergebracht, wobei die Seitenwände 28 einen Schusskanal für die kontrollierte Entfaltung und Ausdehnung des Gassacks 26 bilden. In der gezeigten Ausführung ist der Gassack 26 selbst in einer einfachen Papierbox 30 für den Transport und die Montage untergebracht. Für die Funktion und den Einbau der Airbag-Anordnung ist ein eigenes Gehäuse für den Gassack 26 nicht notwendig; es ist jedoch zweckmäßig, eine Ummantelung aus Papier, Pappe oder Kunststoff vorzusehen, um den Gassack 26 bei Transport und Montage zu schützen.

Der Gassack 26 ist in der gezeigten Ausführung über einen Verbindungskanal 32 mit einem Kaltgasgenerator 34 verbunden. Hierzu ist in dem Aufnahmeraum 24 eine Durchführung 36 vorgesehen. Der Kaltgasgenerator 34 ist in der gezeigten Ausführung unterhalb des Luftführungsbauteils 12 im Bauraum 38 des Polsterbereiches auf der Beifahrerseite untergebracht. Da der Kaltgasgenerator 34 nicht nach dem pyrotechnischen Prinzip arbeitet und bei der Gaserzeugung keine hohen Temperaturen auftreten, gelten hinsichtlich der Anordnung und Montage des Kaltgasgenerators 34 sowie hinsichtlich Länge und Material des Verbindungskanals 32 keine besonders strengen Anforderungen. Selbstverständlich müssen alle Komponenten zuverlässig montiert und angeschlossen sein. Es sind jedoch variablere Abstände zwischen Kaltgasgenerator 34 und Gassack 26 zulässig als bei Verwendung eines pyrotechnischen oder hybriden Gasgenerators. Eine Abstützung am Querträger ist nicht notwendig. Zur Stabilisierung des Systems und Aufnahme von Zug- und Druckkräften während des Auslösens des Airbags kann es jedoch sinnvoll sein, an der Bodenwand und/oder den Seitenwänden des Aufnahmeraums Verstärkungsrippen vorzusehen, die an das Luftführungsbauteil 12 direkt angeformt werden können.

Die Montage der Komponenten der erfindungsgemäßen Airbag-Anordnung ist auch durch pyrotechnisch nicht geschultes Fachpersonal zulässig.

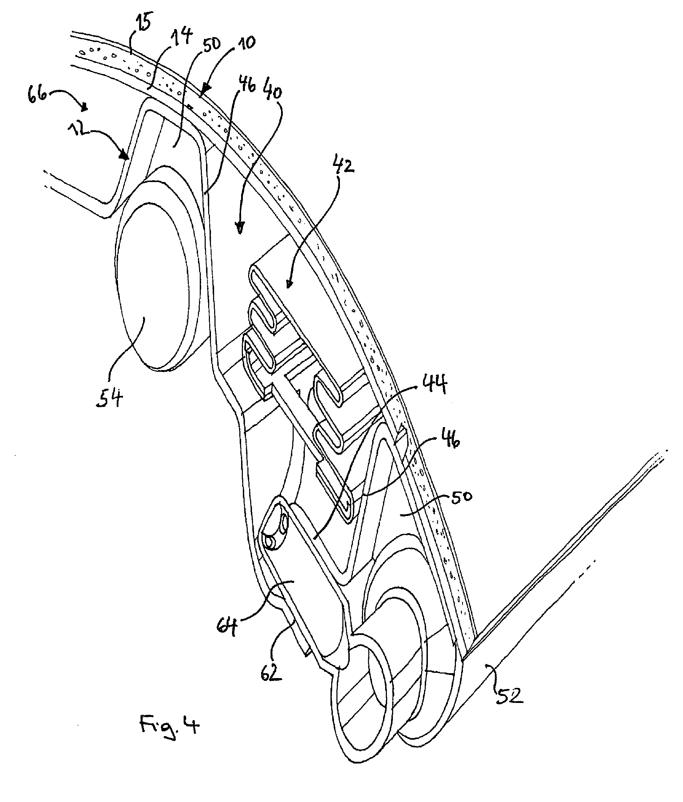

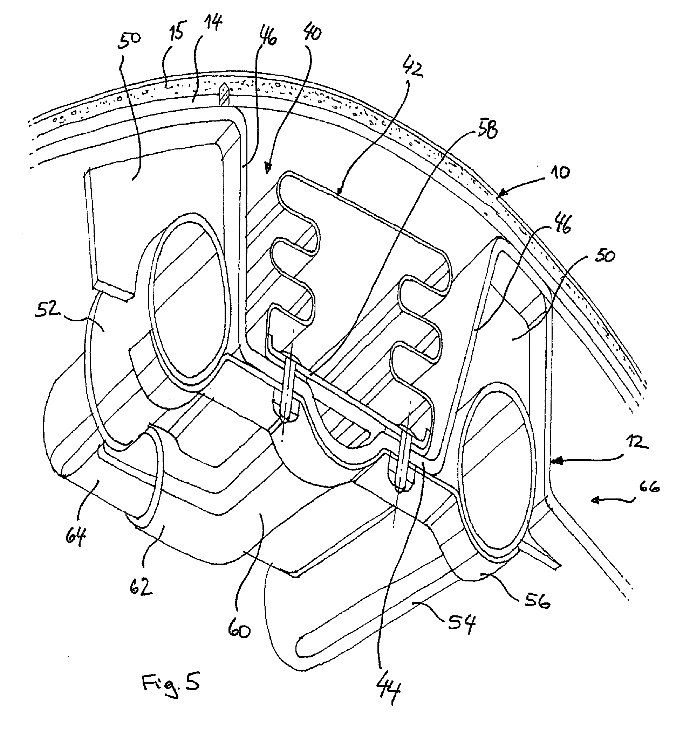

Eine weitere Ausführung der erfindungsgemäßen Airbag-Anordnung ist im Folgenden mit Bezug auf die Figuren 4 und 5 beschrieben.

Die Fig. 4 und 5 zeigen in perspektivischer Schnittdarstellung eine Aufsicht und eine Unteransicht des Luftführungsbauteils 12, das unter der Instrumententafel 10 angeordnet ist, zur Erläuterung des Aufbaus und der Anordnung des erfindungsgemäßen Airbagsystems.

Wie in den Fig. 4 und 5 dargestellt ist ein wannenförmiger Aufnahmeraum 40 zur Aufnahme eines Gassacks 42 an das Luftführungsbauteil 12 angeformt. In einer weniger bevorzugten Ausführung könnte der Aufnahmeraum 40 auch als separates Bauteil gefertigt und an dem Luftführungsbauteil 12 befestigt werden. Der Aufnahmeraum 40 für den Gassack hat eine Bodenwand 44 und Seitenwände 46, die in das Luftführungsbauteil 12 übergehen. An der Bodenwand kann eine Versteifungsstruktur mit Versteifungsrippen (nicht gezeigt) ausgebildet sein. Entlang der Seitenwände 46 ist eine Versteifungsstruktur in Form von Versteifungsrippen 50 angeformt sind, welche sich über einen großen Teil der Höhe der Seitenwände 46 erstrecken. Die Versteifungsrippen 50 dienen in der gezeigten Ausführung auch als Auflager für zwei Kaltgasgeneratoren 52, 54. Die Kaltgasgeneratoren 52, 54 sind an der Bodenwand 44 des Aufnahmeraums 40 mittels Halteklammern 56 angebracht. In der gezeigten Ausführung werden sie zwischen den Halteklammern 56 und den Versteifungsrippen 50 eingespannt, wenn die Halteklammer 56 mit der Bodenwand 44 des Aufnahmeraums 40 verschraubt oder auf andere Weise fest verbunden sind.

Die Kaltgasgeneratoren 52, 54 sind, wie in der gezeigten Ausführungsform, vorzugsweise beidseits des Aufnahmeraums 40 angeordnet. In der gezeigten Ausführung verlaufen sie entlang der Seitenkanten der Bodenwand 44, sie könnten jedoch auch seitlich an den Seitenwänden 46 des Aufnahmeraums 40 oder an der Bodenwand 44 selbst anliegen. Hierbei ist der innerhalb des Luftführungsbauteils 12 zur Verfügung stehende Raum zu berücksichtigen. Ein Hauptluftkanal des Luftführungsbauteils 12 ist bei 66 gezeigt. Zwischen diesem Hauptluftkanal 66 und dem Aufnahmeraum 40 befindet sich freier Raum zur Aufnahme eines der Kaltgasgeneratoren. Die Halteklammern 56 und die Kaltgasgeneratoren 52, 54 können bei geeigneter Ausgestaltung und Anordnung den Wänden des Aufnahmeraums 40 zusätzliche Stabilität verleihen. Daher werden sie vorzugsweise so angeordnet und ausgestaltet, dass sie bei Auslösen des Airbags erzeugte Druck- und Zugkräfte aufnehmen.

In der in den Fig. 4 und 5 gezeigten bevorzugten Ausführung der Erfindung ist ferner eine Diffusor-Platte 58 an der Innenseite der Bodenwand 44 des Aufnahmeraums 40 angeordnet, die bei Auslösen des Airbags das aus den Kaltgasgeneratoren 52, 54 ausströmende Gas in den Gassack 42 leitet. Die Diffusor-Platte weist Gasdurchtrittsöffnungen auf und wirkt mit einem Gaskanal 60 zusammen, der in der Bodenwand 44 des Aufnahmeraums 40 ausgebildet ist. Dieser Gaskanal 60 wird in der gezeigten Ausführung durch eine rinnenartige Ausformung in der Bodenwand 44 gebildet, an deren Enden Ansatzrohrstücke oder Stutzen 62 zur Verbindung mit den Kaltgasgeneratoren 52, 54 angeformt sind. In der gezeigten Ausführung sind die Kaltgasgeneratoren 52, 54 mit ihren Gasauslassstutzen 64 einfach in die Gaskanalstutzen 62 eingeschoben und werden dort durch die Halteklammern 56 in Position gehalten. Jede andere Verbindung der Kaltgasgeneratoren 52, 54 mit den Gaskanalstutzen 62 liegt im Bereich der Erfindung.

Es liegt auch im Bereich der Erfindung, mehr oder weniger als zwei Kaltgasgeneratoren vorzusehen und diese an anderen als den gezeigten Stellen anzubringen.

Die in den Fig. 4 und 5 gezeigte Ausführung ist insofern besonders vorteilhaft, als die Diffusor-Platte 58, die an der Innenseite der Bodenwand 44 anliegt, mit den Halteklammern 56 und den Kaltgasgeneratoren 52, 54 zusammenwirkt und insbesondere die Bodenwand 44 des Aufnahmeraums 40, auf die bei Auslösen des Airbags starke Zug- und Druckkräfte wirken, stabilisiert. In dieser Ausführung ist die erfindungsgemäße Airbag-Anordnung als selbsttragende Baueinheit aufgebaut, die keine zusätzliche Abstützung an dem Fahrzeugaufbau, beispielsweise dem Querträger des Kraftfahrzeugs, erfordert.

In der gezeigten Ausführung wirken die Versteifungsrippen 50, die Kaltgasgeneratoren 52, 54 und die Halteklammern 56 insofern zur Stabilisierung des Aufnahmeraums 40 zusammen, als die auf den Bereich der Bodenwand 44 wirkenden Zug- und Druckkräfte über die Halteklammern 46 und die Kaltgasgeneratoren 52, 54 auf die Versteifungsrippen 50 übertragen und dort in entgegengerichtete Kräfte übersetzt und abgeleitet werden.

Das Luftführungsbauteil 12 und der darin ausgebildete Aufnahmeraum 40 sind erfindungsgemäß vorzugsweise aus einen Kunststoffspritzgussteil oder einem heiß-gepressten Fasermaterial hergestellt, wobei es aufgrund der erfindungsgemäßen Ausgestaltung der Airbaganordnung nicht notwendig ist, in dieses Material weitere Versteifungsstrukturen, wie Glasfasermatten oder dergleichen, zu integrieren. Vielmehr kann das im Stand der Technik übliche Serienmaterial, beispielsweise PP-GF (glasfaserverstärktes Polypropylen) oder PC-ABS (Polycarbonat + Acrylnitril-Butadien-Styrol), zum Einsatz kommen. Die Stabilisierung der Airbag-Anordnung wird durch die Ausgestaltung und Anordnung der Versteifungsrippen 50, der Diffusor-Platte 58, der Halteklammern 56 sowie durch die Kaltgasgeneratoren 52, 54 selbst erreicht. Die Halteklammern 56 und die Diffusor-Platte 58 bestehen vorzugsweise aus Metall, wobei die Diffusor-Platte 58 als eine Einheit mit dem Gassack 42 integriert ist.

In der gezeigten Ausführung bildet die erfindungsgemäße Airbag-Anordnung einen Beifahrer-Airbag und ist in einem Bereich oberhalb des Handschuhfachs unter der Instrumententafel angeordnet. Da innerhalb des Aufnahmeraums 24 nur der Gassack 26 aufgenommen werden muss, kann die Anordnung sehr flach gehalten werden und der für das Handschuhfach zur Verfügung stehende Raum ist größer als bei Verwendung herkömmlicher Airbag-Module.

Es ist auch möglich, die erfindungsgemäße Anordnung für einen Knie-Airbag einzusetzen.

Die Erfindung bietet eine Vielzahl von Vorteilen:

Die Erfindung erlaubt die Verwendung von Kaltgasgeneratoren, die bisher aufgrund der Platzbeschränkungen im Frontbereich einer Fahrgastkabine nicht eingesetzt wurden. Die Airbag-Anordnung erzeugt somit keine thermische Belastung für das System und die Fahrzeugpassagiere. Die Verwendung des Kaltgasgenerators erlaubt die Montage der einzelnen Komponenten - Kaltgasgenerator, Verbindungskanal und Gassack - auch durch nicht pyrotechnisch geschulte Fachkräfte. Ein eigenes Gehäuse ist nicht erforderlich, wodurch sich eine Platzersparnis sowie geringeres Gewicht und geringere Kosten der Airbag-Anordnung ergibt.

Durch die räumliche Trennung von Gassack und Gasgenerator kann der im Bereich einer Instrumententafel zur Verfügung stehende Raum besser ausgenutzt werden, indem der Gasgenerator dort untergebracht wird, wo Platz zur Verfügung steht. Der Gassack selbst benötigt nur einen vergleichsweise kleinen Aufnahmeraum, so dass das Handschuhfach vergrößert werden kann. Durch Integration des Aufnahmeraums in das Luftführungsbauteil vereinfacht sich die Herstellung weiter. Ein Schusskanal ist in den Aufnahmeraum integriert.

Die Erfindung erlaubt erstmals die Bereitstellung eines Beifahrer-Airbags, der gewartet werden kann, weil der Kaltgasgenerator an einer leicht zugänglichen Stelle, beispielsweise hinter dem Handschuhfachkasten, untergebracht werden kann. Auch der Austausch der Gasgeneratoren bei Regelinspektionen ist möglich. Andererseits ist es nicht möglich, bei unversehrter Instrumententafel die komplette Airbag-Einheit widerrechtlich auszubauen, weil die einzelnen Komponenten nicht in einem separaten Gehäuse eines Airbag-Moduls untergebracht sind und der "Ausbau" des Gassacks nur durch Zerstörung der Instrumententafel und/oder des Luftführungsbauteils möglich wäre.

In der mit Bezug auf die Fig. 4 und 5 beschriebenen Ausführungen ergibt sich der weitere Vorteil, dass die Airbag-Anordnung gemäß der Erfindung als eine selbsttragende, sich selbst stabilisierende Einheit aufgebaut werden kann, die nicht an dem Fahrzeugaufbau, beispielsweise einem Querträger, abgestützt werden muss. Dies ist auch bei Verwendung von Material, das keine verstärkenden Zusätze aufweist, für das Luftführungsbauteil möglich, beispielsweise bei Verwendung von einfachem Spritzgusskunststoffoder gepresstem Faserplattenmaterial.

Kurz zusammengefasst ermöglicht die erfindungsgemäße Airbag-Anordnung eine bessere Raumausnutzung, eine Einsparung von Gewicht und Kosten, eine einfachere Montage sowie eine Wartung der Airbag-Anordnung.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausführungen von Bedeutung sein.

### Bezugszeichenliste

- 10: Instrumententafel
- 12: Luftführungsbauteile
- 16: Luftkanal
- 18: Ausnehmung
- 20: Airbagmodul
- 22: Halterung für Airbagmodul
- 24: Aufnahmeraum
- 26: Gassack
- 28: Führungswände
- 30: Papierbox
- 32: Verbindungskanal
- 34: Kaltgasgenerator
- 36: Durchführung
- 38: Bauraum
- 40: Aufnahmeraum
- 42: Gassack
- 44: Bodenwand
- 46: Seitenwände
- 50: Versteifungsrippe
- 52, 54: Kaltgasgeneratoren
- 56: Halteklammern
- 58: Diffusor-Platte
- 60: Gaskanal
- 62: Gaskanalstutzen
- 64: Gasauslassstutzen
- 66: Hauptluftkanal

## Patentansprüche

1. Airbag-Anordnung für ein Kraftfahrzeug, die im Frontbereich der Fahrzeugkabine, insbesondere zum Schutz eines Beifahrers, angeordnet ist, mit einem Gassack (26; 42) und
wenigstens einem Kaltgasgenerator (34; 52, 54), die räumlich getrennt voneinander angeordnet und über einen Gaskanal (32; 60) miteinander verbunden sind, und mit einem Aufnahmeraum (24; 40) für den Gassack (26; 42), der in ein Luftführungsbauteil (12) des Frontbereiches der Fahrzeugkabine integriert ist, wobei der Aufnahmeraum (40) für den Gassack eine Verstärkungsstruktur (48, 50), insbesondere Verstärkungsrippen, aufweist,
der Kaltgasgenerator (34; 52, 54) an der Außenseite des Aufnahmeraums (24; 40) an dem Luftfihrungsbauteil (12) angeordnet ist,
der Kaltgasgenerator (52, 54) mittels einer Halterung (56) an der Außenseite des Aufnahmeraum (40) an einer Bodenwand (44) des Aufnahmeraums (40) angebracht ist und eine Gas-Diffusorplatte (58) in dem Aufnahmeraum (40), der Halterung gegenüberliegend an der Innenseite der Bodenwand (44) angeordnet ist,
wobei der Kaltgasgenerator (52, 54) über die Gas-Diffusorplatte (58) Gas in den Gassack (42) leitet und
wobei die Halterung (56) und die Gas-Diffusorplatte (58) so ausgebildet sind, dass sie eine zwischen ihnen liegende Wand (44) des Aufnahmeraums (40) stabilisieren und bei Auslösen des Airbags wirkende Zug- und Druckkräfte auf die Verstärkungsstruktur ableiten.

2. Airbag-Anordnung nach Anspruch 1, **dadurch gekennzeichnet, dass** der Aufnahmeraum (24; 40) mit dem Luftführungsbauteil (12) einteilig ausgebildet ist.

3. Airbag-Anordnung nach Anspruch 1 oder 2, **dadurch gekennzeichnet, dass** der Kaltgasgenerator (34; 52, 54) an der Außenseite des Aufnahmeraum (24; 40) für den Gassack angebracht ist.

4. Airbag-Anordnung nach einem der vorangehenden Ansprüche, **dadurch gekennzeichnet, dass** der Kaltgasgenerator (34; 52, 54) seitlich des Aufnahmeraum (24; 40) für den Gassack angeordnet ist.

5. Airbag-Anordnung nach Anspruch 4, **dadurch gekennzeichnet, dass** zwei Kaltgasgeneratoren (52, 54) beidseits des Aufnahmeraum (40) für den Gassack angeordnet sind.

6. Airbag-Anordnung nach einem der vorangehenden Ansprüche, **dadurch gekennzeichnet, dass** in einer Wand (44) des Aufnahmeraums (40) für den Gassack der Gaskanal (60) zur Verbindung des Kaltgasgenerators (52, 54) mit dem Gassack (42) ausgebildet ist.

7. Airbag-Anordnung nach Anspruch 6, **dadurch gekennzeichnet, dass** der Kaltgasgenerator (52, 54) an den Gaskanal (60) angeflanscht ist.

8. Airbag-Anordnung nach einem der vorangehenden Ansprüche, **dadurch gekennzeichnet, dass** die Baugruppe aus dem in dem Luftführungsbauteil (12) ausgebildeten Aufnahmeraum (40) für den Gassack und dem Kaltgasgenerator (52, 54) eine selbst tragende Einheit bildet.

9. Airbag-Anordnung nach einem der vorangehenden Ansprüche, **dadurch gekennzeichnet, dass** der Kaltgasgenerator (34; 52, 54) in dem Luftfiihrungsbauteil (12), in Fahrtrichtung des Kraftfahrzeuges, vor dem Aufnahmeraum (24; 40) für den Gassack angeordnet ist.

10. Airbag-Anordnung nach einem der vorangehenden Ansprüche, **dadurch gekennzeichnet, dass** das Luftführungsbauteil (12) unter einer Instrumententafel (10) angeordnet ist und der Aufnahmeraum (24; 40) für den Gassack unmittelbar unter der Instrumententafel (10) liegt.

11. Airbag-Anordnung nach einem der vorangehenden Ansprüche, **dadurch gekennzeichnet, dass** mit dem Aufnahmeraum (24, 40) für den Gassack ein Führungskanal für die Entfaltung des Gassackes (26, 42) verbunden ist oder dass an den Aufnahmeraum (24, 40) für den Gassack ein Führungskanal für die Entfaltung des Gassackes (26, 42) angeformt ist.

## Claims

1. An airbag arrangement for a motor vehicle, which is arranged in the front area of the vehicle cabine, in particular for protection of a fellow passenger, comprising a gas bag (26; 42), and
at least one cold-gas generator (34; 52, 54), which are arranged in a spatially separated manner and connected to each other via a gas channel (32; 60), and
with an accommodating space (24; 40) for the gas bag (26; 42), which is integrated into an air-conveying component (12) of the front area of the vehicle cabine, wherein the accommodating space (40) for the gas bag has a reinforcing structure (48, 50), in particular reinforcing ribs,
the cold-gas generator (34; 52, 54) is arranged on the outer side of the accommodating space (24; 40) on the air-conveying component (12),
the cold-gas generator (52, 54) is attached to the outer side of the accommodating space (40) at a bottom wall (44) of the accommodating space (40) via a mount (56), and a gas diffuser plate (58) is arranged in the accommodating space (40) opposite to the mount on the inner side of the bottom wall (44),
wherein the cold-gas generator (52, 54) supplies gas into the gas bag (42) via the gas diffuser plate (58), and
wherein the mount (56) and the gas diffuser plate (58) are configured such as to stabilize a wall (44) of the accommodating space (40) lying between them and to transfer tensile and compressive forces effective upon activation of the airbag to the reinforcing structure.

2. The airbag arrangement according to claim 1, **characterized in that** the accommodating space (24; 40) is formed integrally with the air-conveying component (12).

3. The airbag arrangement according to claim 1 or 2, **characterized in that** the cold-gas generator (34; 52, 54) is attached to the outer side of the accommodating space (24; 40) for the gas bag.

4. The airbag arrangement according to one of the preceding claims, **characterized in that** the cold-gas generator (34; 52, 54) is arranged laterally to the accommodating space (24; 40) for the gas bag.

5. The airbag arrangement according to claim 4, **characterized in that** two cold-gas generators (52, 54) are arranged on either side of the accommodating space (40) for the gas bag.

6. The airbag arrangement according to one of the preceding claims, **characterized in that** the gas channel (60) for connecting the cold-gas generator (52, 54) to the gas bag (42) is formed in a wall (44) of the accommodating space (40) for the gas bag.

7. The airbag arrangement according to claim 6, **characterized in that** the cold-gas generator (52, 54) is flanged to the gas channel (60).

8. The airbag arrangement according to one of the preceding claims, **characterized in that** the assembly of the accommodating space (40) for the gas bag, which is formed in the air-conveying component (12), and the cold-gas generator (52, 54) forms a self-supporting unit.

9. The airbag arrangement according to one of the preceding claims, **characterized in that** the cold-gas generator (34; 52, 54) is arranged in the air-conveying component (12) in the direction of travel of the motor vehicle in front of the accommodating space (24; 40) for the gas bag.

10. The airbag arrangement according to one of the preceding claims, **characterized in that** the air-conveying component (12) is arranged below an instrument panel (10), and the accommodating space (24; 40) for the gas bag is located directly below the instrument panel (10).

11. The airbag arrangement according to one of the preceding claims, **characterized in that** a guide channel for the inflation of the gas bag (26, 42) is connected to the accommodating space (24, 40) for the gas bag, or that a guide channel for the inflation of the gas bag (26, 42) is formed on the accommodating space (24, 40) for the gas bag.

## Revendications

1. Système d'airbag pour un véhicule automobile, qui est disposé dans la zone frontale de l'habitacle du véhicule, en particulier pour la protection d'un passager, comportant
un coussin gonflable (26 ; 42) et
au moins un générateur de gaz froid (34 ; 52, 54), qui sont disposés en étant séparés l'un de l'autre dans l'espace et qui sont reliés entre eux par un conduit de gaz (32 ; 60), et comportant un logement (24 ; 40) pour le coussin gonflable (26 ; 42), qui est intégré dans un élément aéraulique (12) de la zone frontale de l'habitacle du véhicule, ledit logement (40) pour le coussin gonflable comportant une structure de renfort (48, 50), en particulier des nervures de renfort,
le générateur de gaz froid (34 ; 52, 54) est disposé sur la face extérieure du logement (24 ; 40) au niveau de l'élément aéraulique (12),
le générateur de gaz froid (52, 54) est monté au moyen d'un support (56) sur la face extérieure du logement (40) au niveau d'une paroi de fond (44) du logement (40), et une plaque de diffusion du gaz (58) est disposée dans le logement (40), en regard du support sur la face intérieure de la paroi de fond (44),
le générateur de gaz froid (52, 54) menant le gaz par l'intermédiaire de la plaque de diffusion du gaz (58) vers l'intérieur du coussin gonflable (42), et
le support (56) et la plaque de diffusion du gaz (58) étant réalisés de telle sorte qu'ils stabilisent une paroi (44) du logement (40) interposée entre eux et, au moment du déclenchement de l'airbag, font dévier sur la structure de renfort les forces de traction et de pression exercées.

2. Système d'airbag selon la revendication 1, **caractérisé en ce que** le logement (24 ; 40) est réalisé d'un seul tenant avec l'élément aéraulique (12).

3. Système d'airbag selon la revendication 1 ou 2, **caractérisé en ce que** le générateur de gaz froid (34 ; 52, 54) est monté sur la face extérieure du logement (24 ; 40) pour le coussin gonflable.

4. Système d'airbag selon l'une quelconque des revendications précédentes, **caractérisé en ce que** le générateur de gaz froid (34 ; 52, 54) est disposé à côté du logement (24 ; 40) pour le coussin gonflable.

5. Système d'airbag selon la revendication 4, **caractérisé en ce que** deux générateurs de gaz froid (52, 54) sont disposés de part et d'autre du logement (40) pour le coussin gonflable.

6. Système d'airbag selon l'une quelconque des revendications précédentes, **caractérisé en ce que** le conduit de gaz (60) destiné à relier le générateur de gaz froid (52, 54) avec le coussin gonflable (42) est réalisé dans une paroi (44) du logement (40) pour le coussin gonflable.

7. Système d'airbag selon la revendication 6, **caractérisé en ce que** le générateur de gaz froid (52, 54) est bridé contre le conduit de gaz (60).

8. Système d'airbag selon l'une quelconque des revendications précédentes, **caractérisé en ce que** le groupe formé par le logement (40) pour le coussin gonflable, réalisé dans l'élément aéraulique (12), et par le générateur de gaz froid (52, 54) constitue une unité autoportante.

9. Système d'airbag selon l'une quelconque des revendications précédentes, **caractérisé en ce que** le générateur de gaz froid (34 ; 52, 54) est disposé dans l'élément aéraulique (12) en amont, par référence au sens de déplacement du véhicule, du logement (24 ; 40) pour le coussin gonflable.

10. Système d'airbag selon l'une quelconque des revendications précédentes, **caractérisé en ce que** l'élément aéraulique (12) est disposé en dessous d'un tableau de bord (10) et le logement (24 ; 40) pour le coussin gonflable est situé directement en dessous du tableau de bord (10).

11. Système d'airbag selon l'une quelconque des revendications précédentes, **caractérisé en ce qu'**un conduit aéraulique pour le déploiement du coussin gonflable (26, 42) est relié au logement (24, 40) pour le coussin gonflable, ou en ce qu'un conduit aéraulique pour le déploiement du coussin gonflable (26, 42) est formé contre le logement (24, 40) pour le coussin gonflable.
